(19) Europäisches Patentamt

European Patent Office

Office européen des brevets

(11) **EP 0 907 663 B1**

(12) **EUROPEAN PATENT SPECIFICATION**

(45) Date of publication and mention
of the grant of the patent:
**10.03.2004   Bulletin 2004/11**

(51) Int Cl.[7]: **C08B 15/00**, C08B 31/00,
C07B 57/00

(21) Application number: **97928255.5**

(22) Date of filing: **20.06.1997**

(86) International application number:
**PCT/EP1997/003225**

(87) International publication number:
**WO 1997/049733 (31.12.1997 Gazette 1997/57)**

(54) **THERMALLY IMMOBILIZED POLYSACCHARIDE DERIVATIVES**

THERMISCH IMMOBILISIERTE POLYSACCHARIDDERIVATE

DERIVES DE POLYSACCHARIDE IMMOBILISES THERMIQUEMENT

(84) Designated Contracting States:
**AT BE CH DE DK ES FI FR GB GR IE IT LI LU MC
NL PT SE**

(30) Priority:  **27.06.1996   CH 160896**

(43) Date of publication of application:
**14.04.1999   Bulletin 1999/15**

(73) Proprietors:
• **Novartis AG**
  **4056 Basel (CH)**
  Designated Contracting States:
  **BE CH LI DE DK ES FI FR GB GR IE IT LU MC NL
  PT SE**
• **Novartis Pharma GmbH**
  **1230 Wien (AT)**
  Designated Contracting States:
  **AT**

(72) Inventor: **FRANCOTTE, Eric**
**CH-4412 Nuglar (CH)**

(74) Representative: **Grubb, Philip William et al**
**Novartis AG,
Corporate Intellectual Property,
Lichtstrasse 35
4002 Basel (CH)**

(56) References cited:
**EP-A- 0 656 333          WO-A-97/04011
DD-A- 249 912            US-A- 3 317 513
US-A- 4 892 659**

• **PATENT ABSTRACTS OF JAPAN vol. 18, no. 322
(C-1214), 20 June 1994 & JP 06 072976 A (TOYO
KASEI), 15 March 1994,**
• **DATABASE WPI Week 199527, Derwent
Publications Ltd., London, GB; AN 1995-202894
& JP 7 116 241 A (KYOCERA CORP) 09 May 1995**

**Description**

The invention relates to essentially free-radical initiated thermally crosslinked polysaccharide derivatives which, prior to crosslinking, contained no polymerizable functional groups and which are used as support materials for the chromatographic separation of enantiomers.

In Anal. Methods and Instrumentation, Vol 1, (1993), 23 K. Kimata et al. describe the preparation of a chiral support material which is stable in solvents and which is obtained by polymerizing cellulose vinyl benzoate. The stationary phases, which are chemically bonded and are composed of cellulose, were compared with non-polymerized analogous phases with regard to chiral selectivity and stability to solvents, and it was observed for the chemically bonded cellulose that stability to organic solvents improved and that chiral selectivity was slightly reduced.

In J. Liquid Chromatogr., 18 (1995) 1521, C. Oliveros et al. describe stationary phases composed of cellulose derivatives and containing 10-undecenoyl side chains which have been immobilized on a support. The resulting chiral stationary phases can be immobilized, for example on supports, for example silica gel and have become resistant to the customary solvents, the immobilization method used in this work already having been disclosed in the prior art (e. g. US Patent No. 1,690,620).

DE-A-2 422 365 describes polymers which are suitable for photopolymerization and which have anhydride-containing groups; these polymers are converted by mechanically active light into resistant substances which are suitable for use as protective printing composition or else for the preparation of protective printing stencils for printing plates. A use as a support material for chromatographic separations of enantiomers is not mentioned.

In J. Appl. Polymer Sci., Vol 15, (1971) 1743 N.R. Bertoniere et al. describe cotton tissues which contain, as substituents, cinnamoyl radicals which, upon irradiation with light of a specific wavelength (2573A) first isomerize and then dimerize to give derivatives of truxillic and truxic acid, the photochemical reaction, however, mainly taking place only on the surface of the tissue.

The two US Patents No. 2 682 481 and No. 2 682 482 describe methods of how soluble carbohydrates, in particular cellulose derivatives which have attached to them unsaturated functional groups can be converted by heating with peroxide catalysts and dimerization or further crosslinking to give shaped articles with an insoluble surface.

in a paper from the Staatliche Forschungsinstitut für makromolekulare Chemie, Freiburg i. Breisgau, [State Research Institute for Macromolecular Chemistry] (1957), 233, H. Engelmann et al describe a synthesis method for cellulose tricrotonate and cellulose acetocrotonates and the reaction of these products upon crosslinking with oxygen or light and the addition reaction with halogen and diamines. Mention is made that all resulting products, even those which contain very little crotonyl, have become insoluble in organic solvents. A mention for the suitability as a support material for chromatographic separations of enantiomers is not made.

In Journal of Chromatograhy A, 728 (1996), pp. 407 -414, stationary phases are prepared from polysaccharide derivatives by crosslinking 10-undecenoyl side chains with allyl silica, the selectivity of these phases in most cases being reduced by introducing the10-undecenoyl side chains.

FR-A-2 714 671 also describes stationary phases of polysaccharide derivatives which must necessarily contain unsaturated side chains, for example a 10-undecenoyl side chain, so that a suitable immobilization can take place. In this case too, a multi-step synthesis must be carried out before immobilization, in order to introduce the 10-undecenoyl group, but consistent results can only be obtained with difficulty and the selectivity of the stationary phase is reduced in most cases.

WO-A-9704011 relates to substantially photochemical cross-linked polysaccharide derivatives which do not contain photopolymerisable functional groups prior to cross-linking and which can also be used as carrier materials for the chromatographic separation of enantiomers.

All papers cited use starting materials which contain polymerizable groups for crosslinking, i.e. crosslinking is effected by polymerizing one or more double bonds.

The invention particularly relates to free-radical initiated thermally crosslinked polysaccharide derivatives in which the OH groups, as OR groups, have been converted into a substituted or unsubstituted aryl, arylalkyl, hetaryl, or hetarylalkyl ester or into an aryl, arylalkyl, hetaryl or hetarylalkylcarbamate (urethane) or mixtures of these, with the proviso that the OR groups contained no polymerizable double bonds prior to crosslinking.

Especially important are thermally crosslinked polysaccharide derivatives in which the OH groups, as OR groups, have been converted into a substituted or unsubstituted aryl or arylalkyl ester or into a substituted or unsubstituted aryl- or arylalkylcarbamate or mixtures of these, with the proviso that the OR groups contained no polymerizable double bonds prior to crosslinking.

More especially important are thermally crosslinked cellulose or amylose derivatives in which the OH groups, as OR groups, have been converted into an aryl or arylalkyl ester or aryl- or arylalkylcarbamate, unsubstituted or mono- or polysubstituted by lower alkyl and/or halogen, or mixtures of these, with the proviso that the OR groups contained no polymerizable double bonds prior to crosslinking.

Very specially important are thermally crosslinked cellulose or amylose derivatives in which the OH groups, as OR groups, have been converted into a phenyl or benzyl ester or phenyl- or benzylcarbamate, unsubstituted or mono- or polysubstituted by lower alkyl and/or halogen, or mixtures of these, with the proviso that the OR groups contained no polymerizable double bonds prior to crosslinking.

When the OH groups, as OR groups, are esterified or subjected to carbamate conversion, the hydrogen of the OH group is replaced by an acyl radical of the formula R'-C(=O)- or by the acyl radical of carbamic acid R'-NH-C (=O)-, it not having been necessary for all OH groups to have been converted into the corresponding OR groups.

Lower radicals and compounds are to be understood as meaning hereinabove and hereinbelow for example those which have up to and including 7, preferably up to and including 4, carbon atoms (C atoms).

Examples of polysaccharides are cellulose, amylose, chitosan, dextrin, xylan, amylopectin and curdlan, chitin and inulin, which can be obtained as ultrapure polysaccharides.

Preferred polysaccharides are those which have a degree of polymerization (number of pyranose and furanose rings) of at least a number of 5, and especially preferably of at least a number of 10, to guarantee simple handling.

Lower alkyl is, for example, $C_1$-$C_4$ alkyl, such as methyl, ethyl, propyl or butyl, all of which can be unsubstituted or else substituted by halogen, e.g. fluorine or chlorine, for example trifluoromethyl or trichloromethyl.

Aryl as such is, for example, phenyl or naphthyl, such as 1- or 2-naphthyl, or substituted phenyl or naphthyl, e.g. phenyl or naphthyl which is substituted by lower alkyl, halo-lower-alkyl, hydroxyl, lower alkoxy, lower alkanoyloxy, halogen and/or cyano.

Aryl is preferably phenyl which is unsubstituted or substituted as indicated above, in particular phenyl. Arylalkyl is preferably aryl-lower-alkyl, in particular phenyl-lower-alkyl, very especially phenylethyl or benzyl.

Lower alkoxy is, for example, n-propoxy, isopropoxy, n-butoxy or tert-butoxy, preferably ethoxy and mainly methoxy.

Lower alkanoyloxy is, for example, propionyloxy or pivaloyloxy, preferably acetyloxy.

Halogen is, for example, chlorine or fluorine, furthermore also bromine and iodine. Halo-lower-alkyl is, for example, 2- or 3-halo-lower-alkyl, for example 2-halopropyl, 3-halopropyl or 3-halo-2-methylpropyl.

Hetaryl is to be understood as meaning, in particular, a monocyclic, but also bi- or polycyclic radical of aromatic character. Bi- and polycyclic hetaryl can be composed of a plurality of heterocyclic rings or, preferably, of one heterocycle and one or more, e.g. one or two and in particular one, fused carbocyclic ring, in particular benzene ring. Each individual ring contains, for example, 3, 5, 6, 7 and in particular 5 or 6 ring members. Hetaryl is, in particular, an aza-, thia-, oxa-, thiaza-, thiadiaza-, oxaza-, diaza- and tetrazacyclic radical.

Hetaryl is mainly a monocyclic monoaza-, monothia- or monooxacyclic radical, such as pyrryl, e.g. 2-pyrryl or 3-pyrryl, pyridyl, e.g. 2-, 3- or 4-pyridyl, thienyl, e.g. 2- or 3-thienyl, or furyl, e.g. 2-furyl, a bicyclic monoaza-, monooxa- or monothiacyclic radical, for example indolyl, e.g. 2- or 3-indolyl, quinolinyl, e.g. 2- or 4-quinolinyl, isoquinolinyl, e.g. 1-isoquinolinyl, benzofuranyl, e.g. 2- or 3-benzofuranyl, or benzothienyl, e.g. 2- or 3-benzothienyl, a monocyclic diaza-, triaza-, tetraza-, oxaza-, thiaza- or thiadiazacyclic radical, such as imidazolyl, e.g. 2-imidazoyl, pyrimidinyl, e.g. 2- or 4-pyrimidinyl, triazolyl, e.g. 1,2,4-triazol-3-yl, tetrazolyl, e.g. 1- or 5-tetrazolyl, oxazolyl, e.g. 2-oxazolyl, isooxazolyl, e. g. 3- or 4-isoxazolyl, thiazolyl, e.g. 2-thiazolyl, isothiazolyl, e.g. 3- or 4-isothiazolyl or 1,2,4-or 1,3,4-thiadiazolyl, e.g. 1,2,4-thiadiazol-3yl or 1,3,4-thiadiazol-2-yl, or a bicyclic diaza-, oxaza- or thiazacyclic radical, such as benzimidazolyl, e.g. 2-benzimidazolyl, benzoxazolyl, e.g. 2-benzoxazolyl or benzothiazoyl, e.g. 2-benzothiazolyl.

Hetaryl radicals are unsubstituted or have substituents attached to them. Suitable substituents on ring carbon atoms are, for example, the substituents mentioned above for aryl radicals, and additionally oxo (=O). Ring nitrogen atoms can be substituted, for example, by lower alkyl, aryl-lower alkyl, lower alkanoyl, benzyl, carboxyl, lower alkoxycarbonyl, hydroxyl, lower alkoxy, lower alkanoyloxy or oxido (-O). Hetaryl is, above all, pyridyl, thienyl, pyrryl or furyl.

Hetarylalkyl radicals are composed of the abovementioned hetaryl radicals and the alkyl radicals mentioned earlier, in particular lower alkyl radicals. Hetaryl-lower-alkyl is, above all, pyridyl-, thienyl-, pyrryl or furylmethyl.

The compounds according to the invention are prepared by subjecting polysaccharide derivatives in which the OH groups, as OR groups, have been esterified or converted into a carbamate to thermal crosslinking after they have previously been coated onto a support, or after previous conditioning as a pure material.

The cellulose derivatives can be thermally immobilized by a variety of processes:

a) On the one hand, the thermal treatment can be effected after applying a coating of the cellulose derivative, for example after coating the cellulose derivative onto a support, for example macroporous silica gel, in the presence of a free-radical initiator, for example $\alpha,\alpha'$-azoisobutyronitrile (AIBN).

b) In another process, the cellulose derivative is coated onto a support, for example macroporous silica gel, and the coated silica gel is further coated with an AIBN solution before carrying out the thermal treatment.

c) In a further process, compounds according to the invention can be prepared by subjecting polysaccharides which have previously been conditioned as pure material, for example as beads or membranes, to thermal crosslinking using a free-radical initiator, for example AIBN, to give the compounds according to the invention.

The thermal treatment is effected by heating the coated support material, or the conditioned pure material, to 50-150°, but preferably to 100-120°.

Suitable supports which can be used are silicon dioxides, e.g. silica gel or modified silica gel, in particular amino-silanized silica gel, glass, also aluminium oxides (alumina), graphite, zirconium oxide (zirconia).

The polysaccharides used as starting compounds, in which the OH groups, as OR groups, have been esterified or converted into a carbamate (urethane), are prepared by esterifying the free OH groups of the polysaccharide compounds or converting them into a carbamate (urethane).

Esterification and preparation of carbamate are effected in a manner known per se by reacting the material with an isocyanate or with a reactive functional carboxylic acid derivative.

For example, esterification can be effected with unsubstituted or substituted benzoyl halides, in particular benzoyl chlorides, the corresponding carboxylic anhydrides, or else a mixture of the corresponding carboxylic acid and a suitable dehydrating agent.

Any inert solvent which does not hinder esterification can be used for the esterification, and, as a rule, a catalyst, for example a tertiary amine, e.g. 4-(N,N-dimethylamino)pyridine, is also added.

The carbamate is normally prepared by reacting the material with a suitable isocyanate in the presence of the suitable catalyst. Catalysts which can be used are Lewis bases, e.g. tertiary amines, or else Lewis acids, e.g. a tin compound, e.g. dibutyltin dilaurate.

The reaction is preferably carried out in the presence of a tertiary base, for example in the presence of pyridine or quinoline, which simultaneously also act as the solvent, but 4-(N,N-dimethylamino)pyridine is preferably also used as tertiary base as a reaction accelerator. Substances which are used, in particular, to convert the OH groups into the corresponding OR groups by esterification or carbamate preparation are unsubstituted or substituted benzoyl chlorides or phenyl isocyanates.

Chlorine- or methyl-substituted phenyl isocyanates or benzyl chlorides are preferably used, it being possible for the methyl groups and chlorine atoms to be arranged in the meta or ortho position relative to each other.

The thermally crosslinked polysaccharide derivatives according to the invention are used as chiral supports for the chromatographic separation of enantiomers.

Surprisingly, the process according to the invention allows immobilization of polysaccharide derivatives without polymerizable functional groups, the result being a high resistance to solvents.

Surprisingly, the high separation capacity is retained fully after immobilization.

The immobilization permits the use of mobile phases which contain, for example, methylene chloride, tetrahydrofuran, chloroform, dioxane or ethyl acetate and which would dissolve the non-immobilized polysaccharide derivatives.

The use of such mobile phases gives better results in the enantiomer separation of a large number of racemates and also allows samples which are sparingly soluble to be dissolved.

The thermally crosslinked polysaccharides according to the invention in conditioned form can also be used as pure polymers for the chromatographic separation of enantiomers.

A further possible application is the use of crosslinked polysaccharide derivatives for the preparation of coatings of various materials such as wood, paper, polymers and metals.

Furthermore, the thermally crosslinked polysaccharides according to the invention can also be used as a material for the preparation of a variety of membranes for any purpose.

The various chromatographic enantiomer separations are described in greater detail and illustrated after the preparative part (examples).

The examples which follow (including the preparation of the starting materials and intermediates) are intended to illustrate and further elucidate the invention.

Temperatures are given in degrees Celsius, pressure, unless otherwise indicated, in bar.

Example 1

1.6 g of cellulose Tris(4-methylbenzoate) (preparation following a known protocol: J. Chromatogr., 595 (1992) 63) together with 1.6 g of $\alpha,\alpha'$-azoisobutyronitrile (AIBN) are dissolved in 60 ml of methylene chloride. 3,5 g of amino-silanized silica (prepared following a known method from Nucleosil-4000, particle size 10 $\mu$m, Macherey-Nagel) are suspended in this solution. This suspension is subsequently concentrated on a Rotavapor and dried in a high vacuum. Yield 6.7 g.

The resulting powder is heated in the dry state in a round-bottom flask at 120° C for 6 hours under nitrogen. The product is suspended in 150 ml of methanol and the suspension is stirred for 1 hour. The suspension is subsequently filtered and the residue is washed with methanol and dried. Yield 5.03 g. To remove non-immobilized material, the product is extracted for 17 hours in a Soxhlet using methylene chloride. The insoluble residue is suspended in approximately 30 ml of methylene chloride and the suspension is stirred for about 30 minutes. Then, 300 ml of hexane are added (rate of addition: 1.6 ml/min). The product is filtered off and washed with hexane.
Yield 3.7 g.
Elemental analysis: C 8.18; H 0.80.

Example 2

1.42 g of cellulose Tris(phenylcarbamate) (preparation following a known protocol: J. Chromatogr., 363 (1986) 173) together with 1.42 g of AIBN are dissolved in a mixture of 10 ml of methylene chloride and 30 ml of tetrahydrofuran. 3.25 g of amino-silanized silica (Nucleosil-4000, particle size 7 $\mu$m, Macherey-Nagel) are suspended in this solution. The suspension is homogenized for 1 hour at room temperature in an ultrasonic bath and subsequently concentrated on a Rotavapor. The resulting powder is heated in the dry state in a round-bottom flask at 120°C for 7 hours under nitrogen. The product is suspended in 150 ml of methanol and the suspension is stirred for 1 hour. The suspension is subsequently filtered and the residue is washed with methanol and dried.
Yield 4.5 g.
To remove non-immobilized material, the product is extracted with tetrahydrofuran for 17 hours in a Soxhlet. After drying in vacuo, 3.58 g are isolated. The insoluble residue is suspended in approximately 30 ml of tetrahydrofuran and the suspension is stirred for approximately 30 minutes. Then, 300 ml of hexane are added (rate of addition: 1.6 ml/ min). The product is filtered off and washed with hexane.
Yield 3.5 g.
Elemental analysis: C 9.75; H 0.88.

Example 3

1 g of cellulose Tris(3,5-dimethylphenylcarbamate) (preparation following a known protocol: J. Chromatogr., 363 (1986) 173) together with 1 g of AIBN are dissolved in 25 ml of tetrahydrofuran. This solution is divided into three parts. 3 g of amino-silanized silica (Nucleosil-4000, particle size 7 $\mu$m, Macherey-Nagel) are mixed in succession with the three parts and in each case subsequently evaporated on a Rotavapor at 30°C. 4 g are isolated after drying in vacuo. The powder is heated in the dry state in a round-bottom flask for 15 hours at 120°C under nitrogen. The product is suspended in 100 ml of methanol and stirred for 1 hour. The suspension is then filtered and the residue is washed with methanol and dried. Yield 3.94 g. To remove non-immobilized material, the product is extracted for 17 hours in a Soxhlet with tetrahydrofuran. The insoluble residue is suspended in approximately 30 ml of tetrahydrofuran, and 300 ml of hexane are added (rate of addition: 1.6 ml/min). The product is filtered off and washed with hexane (3.2 g).
Elemental analysis: C 7.63; H 0.81; N 0.89.

**Example 4**

3.5 g of amino-silanized silica (Nucleosil-4000, particle size 7 $\mu$m, Macherey-Nagel) coated with 25 % by weight of cellulose Tris(3,5-dimethylphenylcarbamate) (preparation following a known protocol: J. Chromatogr., 363 (1986) 173) are suspended in a solution of 525 mg of AIBN in 15 ml of methanol. This suspension is subsequently evaporated on a Rotavapor and dried in a high vacuum.
The powder is heated in the dry state in a round-bottom flask at 120°C for 14 hours under nitrogen. The product is suspended in 80 ml of methanol and stirred for 1/2 hours. The suspension is subsequently filtered and the product is washed with ethanol and dried. Yield 3.33 g. To remove non-immobilized material, the product is extracted for 17 hours in a Soxhlet with tetrahydrofuran. The insoluble residue is suspended in approximately 30 ml of tetrahydrofuran, and 300 ml of hexane are added (rate of addition: 1.6 ml/min). The product is filtered off and washed with hexane (2.6 g).
Elemental analysis: C 7.78; H 0.85; N 1.00.

*Column packing:*

2.5 g of the resulting material are suspended in 25 ml of hexane/ethanol (90:10, vol %), and this was used to pack a steel column (25 cm x 0.4 cm) by the slurry method, at a pressure of 100 bar.

***Test of the chiral stationary phases:***

The phases of Examples 1-4 were tested using a variety of racemic structures and a variety of mobile phases (see the tables).

HPLC chromatography was carried out by means of a Shimadzu LC-6A system at a flow rate of 0.7 ml/min. and at room temperature. Detection was effected by UV spectroscopy and polarimetry (Perkin Elmer 241 LC). The measured value was the separation factor $\alpha$.

$$\alpha = \frac{k'_2}{k'_1} = \frac{t_2 - t_o}{t_1 - t_0}$$

where $k'_2$ and $k'_1$ are the capacity factors of the second and first enantiomers which are eluted, and $t_2$ and $t_1$ are their retention times. $t_o$ is the elution time of tri-*tert*-butylbenzene (non-retained compound)

## Separation factor in chromatographic separations using the product of Example 1

| Mobile phase | Hexane/ 2-propanol 9:1 | | Heptane/ chloroform 9:1 | | Heptane/ chloroform 75:25 | |
|---|---|---|---|---|---|---|
| | $k'_1$ | $\alpha$ | $k'_1$ | $\alpha$ | $k'_1$ | $\alpha$ |
| | 1.40 | 2.06 | 1.14 | 2.07 | 0.23 | 1.00 |
| | 0.59 | 6.91 | 0.33 | 3.96 | 0.12 | 1.00 |
| | 0.70 | 1.27 | 5.22 | 1.73 | 1.25 | 1.50 |
| | 0.63 | 1.35 | 0.46 | 1.00 | 0.13 | 1.00 |
| | 2.88 | 1.00 | 7.11 | 1.18 | 1.31 | 1.16 |
| | 2.42 | 1.70 | 5.35 | 1.89 | 0.82 | 1.67 |
| | insoluble | insoluble | insoluble | insoluble | 3.12 | 1.27 |
| | 1.10 | 1.55 | 3.36 | 1.96 | 0.85 | 1.71 |

**Separation factor in chromatographic separations using the product of Example 2**

| Mobile phase | Hexane/ 2-propanol 9:1 | | Heptane/ chloroform 1:1 | |
|---|---|---|---|---|
| | $k'_1$ | $\alpha$ | $k'_1$ | $\alpha$ |
| | 0.75 | 1.47 | 1.17 | 1.22 |
| | 1.82 | 1.87 | 0.18 | 2.18 |
| | 1.56 | 1.36 | 0.26 | 1.00 |
| | 0.52 | 1.31 | 0.06 | 1.00 |
| | 2.79 | 1.11 | 0.95 | 1.40 |
| | 2.44 | 1.28 | 1.38 | 1.40 |
| | 0.28 | 2.03 | 0.53 | 1.69 |
| | 0.33 | 1.34 | 0.07 | 1.00 |
| | --- | --- | 3.08 | 1.81 |

| Mobile phase | Hexane/ 2-propanol 9:1 | | Heptane/ chloroform 1:1 | |
|---|---|---|---|---|
| | $k'_1$ | $\alpha$ | $k'_1$ | $\alpha$ |
| | 0.79 | 1.26 | 0.65 | 1.00 |

### Separation factor in chromatographic separations using the product of Example 3

| Mobile phase | Hexane/ 2-propanol 9:1 | | Heptane/ chloroform 1:1 | |
|---|---|---|---|---|
| | $k'_1$ | $\alpha$ | $k'_1$ | $\alpha$ |
| HO–CF$_3$ anthracene derivative | 1.22 | 2.88 | 1.83 | 3.78 |
| benzoxazine N-acetyl derivative | 0.86 | 1.65 | 0.15 | 1.00 |
| pyridyl ketone dichlorophenoxy derivative | 0.79 | 3.43 | 0.16 | 1.00 |
| dimethyl dibenzodiazepine derivative | 0.59 | 1.24 | 0.96 | 1.00 |
| dichlorophenyl triazole COOCH(CH$_3$)$_2$ derivative | 1.28 | 1.43 | 1.27 | 1.78 |
| benzoin (diphenyl hydroxy ketone) | 1.31 | 1.56 | 0.26 | 1.47 |
| HO–CF$_2$CF$_3$ anthracene derivative | 0.75 | 3.39 | 1.12 | 11.03 |
| stilbene oxide | 0.42 | 2.17 | 0.13 | 2.57 |

| Mobile phase | Hexane/ 2-propanol 9:1 | | Heptane/ chloroform 1:1 | |
|---|---|---|---|---|
| | $k'_1$ | $\alpha$ | $k'_1$ | $\alpha$ |
| | 0.45 | 1.83 | 0.13 | 1.61 |
| | 2.41 | 1.23 | 0.61 | 1.31 |
| | 2.84 | 1.00 | 1.06 | 1.39 |
| | 0.79 | 1.44 | 0.14 | 1.00 |
| | 3.04 | 3.01 | 2.44 | 3.10 |
| | 0.80 | 1.96 | 0.30 | 1.59 |
| | 6.16 | 1.31 | 0.52 | 1.70 |
| | 1.02 | 1.78 | 0.75 | 1.38 |

## Separation factor in chromatographic separations using the product of Example 4

| Mobile Phase | Hexane/ 2-propanol 9:1 | | Heptane/ chloroform 1:1 | |
|---|---|---|---|---|
| | $k'_1$ | $\alpha$ | $k'_1$ | $\alpha$ |
| HO, CF₃ structure | 1.28 | 2.83 | 2.00 | 3.36 |
| benzoxazine N-acetyl CH₃ structure | 0.94 | 1.56 | 0.17 | 1.0 |
| dichlorophenoxy pyridyl ketone Et structure | 0.88 | 1.35 | 0.18 | 1.0 |
| dimethyl dibenzodiazocine structure | 0.62 | 1.24 | 0.11 | 1.0 |
| triazole dichlorophenyl COOCH(CH₃)₂ structure | 1.41 | 1.40 | 1.40 | 1.87 |
| benzoin OH structure | 1.43 | 1.54 | 0.29 | 1.41 |
| HO, CF₂CF₃ anthracene structure | 0.80 | 3.49 | 1.17 | 9.30 |
| stilbene oxide structure | 0.44 | 2.09 | 0.14 | 2.19 |

| Mobile Phase | Hexane/ 2-propanol 9:1 | | Heptane/ chloroform 1:1 | |
|---|---|---|---|---|
| | $k'_1$ | $\alpha$ | $k'_1$ | $\alpha$ |
| | 0.48 | 1.73 | 0.14 | 1.57 |
| | 2.55 | 1.23 | 0.69 | 1.30 |
| | 1.07 | 1.72 | 0.84 | 1.34 |

## Claims

1. A polysaccharide derivative immobilized by thermally-induced free-radical initiated cross-linking in which the OH groups, as OR groups, have been converted into a substituted or unsubstituted aryl, arylalkyl, hetaryl, or hetarylalkyl ester or into an aryl-, arylalkyl-, hetaryl- or hetarylalkylcarbamate (urethane) or mixtures of these, with the proviso that the OR groups contained no polymerizable double bonds prior to cross linking.

2. A polysaccharide derivative immobilized by thermally induced, free-radical initiated cross-linking in which the OH groups, as OR groups, have been converted into a substituted or unsubstituted aryl or arylalkyl ester or into a substituted or unsubstituted aryl or arylalkylcarbamate or mixtures of these, with the proviso that the OR groups contained no polymerizable double bonds prior to cross-linking.

3. Cellulose or amylose derivative immobilized by thermally induced, free-radical initiated cross-linking in which the OH groups, as OR groups, have been converted into an aryl- or arylalkyl ester or aryl or arylalkylcarbamate, unsubstituted or mono- or polysubstituted by lower alkyl and/or halogen, or mixtures of these, with the proviso that the OR groups contained no polymerizable double bonds prior to cross linking.

4. Cellulose or amylose derivative immobilized by thermally induced, free-radical initiated cross-linking in which the OH groups, as OR groups, have been converted into a phenyl or benzyl ester or phenyl- or benzylcarbamate, unsubstituted or mono- or polysubstituted by lower alkyl and/or halogen, or mixtures of these, with the proviso that the OR groups contained no polymerizable double bonds prior to cross linking.

5. A process for the preparation of cross linked polysaccharide derivatives as claimed in claim 1, which comprises subjecting polysaccharide derivatives in which the OH groups, as OR groups, have been esterified or converted into a carbamate (urethane) to thermal cross linking.

   a) after previously coating the cellulose derivative onto a support in the presence of a free-radical initiator, or

b) after coating the cellulose derivative onto a support and further coating the support with a solution of a free-radical initiator, or

c) after previously conditioning them as pure material in the presence of a free-radical initiator

to give the compound of claim 1.

6. A method as claimed in claim 5, wherein polysaccharide derivatives in which the OH groups, OR groups, have been converted into an unsubstituted or substituted aryl, arylalkyl, hetaryl or hetarylalkyl ester or into an unsubstituted or substituted aryl-, arylalkyl-, hetaryl- or hetarylalkylcarbamate are subjected to thermal cross linking

a) after previously coating the cellulose derivative onto a support in the presence of a free-radical initiator, or

b) after coating the cellulose derivative onto a support and further coating the support with a solution of a free-radical initiator, or

c) after previously conditioning them as pure material in the presence of a free-radical initiator

to give the compound of claim 1.

7. A process as claimed in claim 5, wherein polysaccharide derivatives in which the OH groups, as OR groups, have been converted into an unsubstituted or substituted aryl or arylalkyl ester or into an unsubstituted aryl- or arylalkylcarbamate, are subjected to thermal cross linking

a) after previously coating the cellulose derivative onto a support in the presence of a free-radical initiator, or

b) after coating the cellulose derivative onto a support and further coating the support with a solution of a free-radical initiator, or

c) after previously conditioning them as pure material in the presence of a free-radical initiator

to give the compound of claim 2.

8. A process as claimed in claim 5, wherein cellulose or amylose derivatives in which the OH groups, as OR groups, have been converted into an aryl or arylalkyl ester which is unsubstituted or mono- or polysubstituted by lower alkyl and/or halogen or into an aryl- or arylalkylcarbamate which is unsubstituted or mono- or polysubstituted by lower alkyl and/or halogen are subjected to thermal cross-linking

a) after previously coating the cellulose derivative onto a support in the presence of a free-radical initiator, or

b) after coating the cellulose derivative onto a support and further coating the support with a solution of a free-radical initiator, or

c) after previously conditioning them as pure material in the presence of a free-radical initiator

to give the compound of claim 3.

9. A process as claimed in claim 5, wherein cellulose or amylose derivatives in which the OH groups, as OR groups, have been converted into a phenyl or benzyl ester which is unsubstituted or mono- or polysubstituted by lower alkyl and/or halogen or into a phenyl- or benzylcarbamate which is unsubstituted or mono- or polysubstituted by lower alkyl and/or halogen are subjected to thermal cross linking

a) after previously coating the cellulose derivative onto a support in the presence of a free-radical initiator, or

b) after coating the cellulose derivative onto a support and further coating the support with a solution of a free-radical initiator, or

c) after previously conditioning them as pure material in the presence of a free-radical initiator

to give the compound of claim 4.

10. A process as claimed in any of claims 5-9, wherein cross-linking is effected thermally by heating to 50-150°.

11. A process as claimed in any of claims 5-9, wherein cross-linking is effected thermally by heating to 100-120°.

12. A process as claimed in any of claims 5-9, wherein the free-radical initaitior used is $\alpha,\alpha'$-azoisobutyronitrile (AIBN).

13. A process as claimed in any of claims 5-9, wherein a silica gel, modified silica gel, aluminium oxide (alumeina), glass, graphite or zirconium oxide is used as support for the coating.

14. A process as claimed in any of claims 5-9, wherein macroporous silica gel is used as support for the coating.

15. The use of thermally cross linked polysaccharide derivatives as claimed in any of claims 1-4 as stationary phase in chromatographic methods, in particular for the separation of enantiomers.

16. The use of thermally cross-linked polysaccharide derivatives as claimed in any of claims 1-4 as a material for the preparation of membranes for various uses.

17. The use of thermally cross-linked polysaccharide derivatives as claimed in any of claims 1-4 for the preparation of coatings of various materials, e.g. wood, paper, polymers and metals.

**Patentansprüche**

1. Polysaccharidderivat, das durch eine thermisch induzierte, radikalisch initiierte Vernetzung immobilisiert ist, worin die OH-Gruppen in Form von OR-Gruppen in einen substituierten oder unsubstituierten Aryl-, Arylalkyl-, Heteroaryl- oder Heteroarylalkylester oder in ein Aryl-, Arylalkyl-, Heteroaryl- oder Heteroarylalkylcarbamat (Urethan) oder Gemische hiervon umgewandelt wurden, wobei gilt, dass die OR-Gruppen vor der Vernetzung keine polymerisierbaren Doppelbindungen enthielten.

2. Polysaccharidderivat, das durch eine thermisch induzierte, radikalisch initiierte Vernetzung immobilisiert ist, worin die OH-Gruppen in Form von OR-Gruppen in einen substituierten oder unsubstituierten Aryl- oder Arylalkylester oder in ein substituiertes oder unsubstituiertes Aryl- oder Arylalkylcarbamat oder Gemische hiervon umgewandelt wurden, wobei gilt, dass die OR-Gruppen vor der Vernetzung keine polymerisierbaren Doppelbindungen enthielten.

3. Cellulose- oder Amylosederivat, das durch eine thermisch induzierte, radikalisch initiierte Vernetzung immobilisiert ist, worin die OH-Gruppen in Form von OR-Gruppen in einen Aryl- oder Arylalkylester oder in ein Aryl- oder Arylalkylcarbarnat, der bzw. das nicht substituiert oder durch Niedrigalkyl und/oder Halogen mono- oder polysubstituiert ist, oder Gemische hiervon umgewandelt wunden, wobei gilt, dass die OR-Gruppen vor der Vernetzung keine polymerisierbaren Doppelbindungen enthielten.

4. Cellulose- oder Amylosederivat, das durch eine thermisch induzierte, radikalisch initiierte Vernetzung immobilisiert ist, worin die OH-Gruppen in Form von OR-Gruppen in einen Phenyl- oder Benzylester oder in ein Phenyl- oder Benzylcarbamat, der bzw, das nicht substituiert oder durch Niedrigalkyl und/oder Halogen mono- oder polysubstituiert ist, oder Gemische hiervon umgewandelt wurden, wobei gilt, dass die OR-Gruppen vor der Vernetzung keine polymerisierbaren Doppelbindungen enthielten.

5. Verfahren zur Herstellung von vernetzten Poylsaccharidderivaten gemäß Anspruch 1, das ein thermisches Vernetzen von Polysaccharidderivaten umfasst, worin die OH-Gruppen in Form von OR-Gruppen verestert oder in ein Carbamat (Urethan) umgewandelt wurden,

   a) nachdem das Cellulosederivat in Gegenwart eines Radikalstarters zuvor auf einen Träger aufgetragen wurde,
   b) nachdem das Cellulosederivat auf einen Träger aufgetragen wurde und ferner der Träger mit einer Lösung eines Radikalstarters beschichtet wurde, oder
   c) nachdem sie als reines Material zuvor in Gegenwart eines Radikalstarters konditioniert wurden,

   wobei die Verbindung nach Anspruch 1 erhalten wird.

6. Verfahren nach Anspruch 5, wobei die Polysaccharidderivate, worin die OH-Gruppen in Form von OR-Gruppen in einen unsubstituierten oder substituierten Aryl-, Arylalkyl-, Heteroaryl- oder Heteroarylalkylester oder in ein unsubstituiertes oder substituiertes Aryl-, Arylalkyl-, Heteroaryl- oder Heteroarylalkylcarbamat umgewandelt wurden, einer thermischen Vernetzung unterzogen werden,

a) nachdem das Cellulosederivat in Gegenwart eines Radikalstarters zuvor auf einen Träger aufgetragen wurde,
b) nachdem das Cellulosederivat auf einen Träger aufgetragen wurde und ferner der Träger mit einer Lösung eines Radikalstarters beschichtet wurde, oder
c) nachdem sie als reines Material zuvor in Gegenwart eines Radikalstarters konditioniert wurden,

wobei die Verbindung nach Anspruch 1 erhalten wird.

7. Verfahren nach Anspruch 5, wobei die Polysaccharidderivate, worin die OH-Gruppen in Form von OR-Gruppen in einen unsubstituierten oder substituierten Aryl- oder Arylalkylester oder in ein unsubstituiertes Aryl- oder Arylalkylcarbamat umgewandelt wurden, einer thermischen Vernetzung unterzogen werden,

a) nachdem das Cellulosederivat in Gegenwart eines Radikalstarters zuvor auf einen Träger aufgetragen wurde,
b) nachdem das Cellulosederivat auf einen Träger aufgetragen wurde und ferner der Träger mit einer Lösung eines Radikalstarters beschichtet wurde, oder
c) nachdern sie als reines Material zuvor in Gegenwart eines Radikalstarters konditioniert wurden,

wobei die Verbindung nach Anspruch 2 erhalten wird,

8. Verfahren nach Anspruch 5, wobei die Cellulose- oder Amylosederivate, worin die OH-Gruppen in Form von OR-Gruppen in einen Aryl- oder Arylalkylester, der nicht substituiert ist oder durch Niedrigalkyl und/oder Halogen mono- oder polysubstituiert ist, oder in ein Aryl- oder Arylalkylcarbamat, das nicht substituiert ist oder durch Niedrigalkyl und/oder Halogen mono- oder polysubstituiert ist, umgewandelt wurden, einer thermischen Vernetzung unterzogen werden,

a) nachdem das Cellulosederivat in Gegenwart eines Radikalstarters zuvor auf einen Träger aufgetragen wurde,
b) nachdem das Cellulosederivat auf einen Träger aufgetragen wurde und ferner der Träger mit einer Lösung eines Radikalstarters beschichtet wurde, oder
c) nachdem sie als reines Material zuvor in Gegenwart eines Radikalstarters konditioniert wurden,

wobei die Verbindung nach Anspruch 3 erhalten wird.

9. Verfahren nach Anspruch 5, wobei die Cellulose- oder Amylosederivate, worin die OH-Gruppen in Form von OR-Gruppen in einen Phenyl- oder Benzylester, der nicht substituiert ist oder durch Niedrigalkyl und/oder Halogen mono- oder polysubstituiert ist, oder in ein Phenyl- oder Benzylcarbamat, das nicht substituiert ist oder durch Niedrigalkyl und/oder Halogen mono- oder polysubstituiert ist, umgewandelt wurden, einer thermischen Vernetzung unterzogen werden,

a) nachdem das Cellulosederivat in Gegenwart eines Radikalstarters zuvor auf einen Träger aufgetragen wurde,
b) nachdem das Cellulosederivat auf einen Träger aufgetragen wurde und ferner der Träger mit einer Lösung eines Radikalstarters beschichtet wurde, oder
c) nachdem sie als reines Material zuvor in Gegenwart eines Radikalstarters konditioniert wurden,

wobei die Verbindung nach Anspruch 4 erhalten wird.

10. Verfahren nach einem der Ansprüche 5 bis 9, wobei die Vernetzung thermisch durch Erwärmen auf 50 bis 150 °C erfolgt.

11. Verfahren nach einem der Ansprüche 5 bis 9, wobei die Vernetzung thermisch durch Erwärmen auf 100 bis 120 °C erfolgt.

12. Verfahren nach einem der Ansprüche 5 bis 9, wobei der verwendete Radikalstarter $\alpha$, $\alpha$'-Azobisisobutyronitril (AIBN) ist.

13. Verfahren nach einem der Ansprüche 5 bis 9, wobei als Träger für den Überzug ein Silicagel, modifiziertes Silicagel, Aluminiumoxid (Alaunerde), Glas, Graphit oder Zirkoniumdioxid verwendet wird.

14. Verfahren nach einem der Ansprüche 5 bis 9, wobei als Träger für den Überzug makroporöses Silicagel verwendet wird.

15. Verwendung von thermisch vernetzten Polysaccharidderivaten nach einem der Ansprüche 1 bis 4 als stationäre Phase in chromatographischen Verfahren, insbesondere zur Trennung von Enantiomeren.

16. Verwendung von thermisch vemetzten Polysaccharidderivaten nach einem der Ansprüche 1 bis 4 als Material zur Herstellung von Membranen für verschiedene Verwendungen.

17. Verwendung von thermisch vernetzten Polysaccharidderivaten nach einem der Ansprüche 1 bis 4 zur Herstellung von Überzügen für verschiedene Materialien, beispielsweise Holz, Papier, Polymere und Metalle.

**Revendications**

1. D érivé p olysaccharidique i mmobilisé p ar une r éticulation i nitiée par des radicaux libres, thermiquement induite, dans lequel les groupes OH, tels que des groupes OR, ont été transformés en un ester d'aryle, aralkyle, hétaryle ou hétarylalkyle substitué ou non substitué ou en un groupe carbamate d'aryle, arylalkyle, hétaryle ou hétarylalkyle (uréthane), ou des mélanges de ceux-ci, sous réserve que les groupes OR ne contiennent pas de doubles liaisons polymérisables avant la réticulation.

2. D érivé p olysaccharidique immobilisé p ar une r éticulation initiée par des radicaux libres, thermiquement induite, dans lequel les groupes OH, tels que des groupes OR, ont été transformés en un ester d'aryle ou d'arylalkyle substitué ou non substitué ou en un caramabate d'aryle ou d'arylakyle substitué ou non substitué, ou des mélanges de ceux-ci, sous réserve que les groupes OR ne contiennent pas de doubles liaisons polymérisables avant la réticulation.

3. Dérivé de cellulose ou d'amylose immobilisé par une réticulation initiée par des radicaux libres, thermiquement induite, dans lequel les groupes OH, tels que des groupes OR, ont été transformés en un ester d'aryle ou d'arylalkyle ou un carbamate d'aryle ou d'arylalkyle, non substitué ou mono- ou polysubstitué par un groupe alkyle inférieur et/ou un halogène, ou des mélanges de ceux-ci, sous réserve que les groupes OR ne contiennent pas de doubles liaisons polymérisables avant la réticulation.

4. Dérivé de cellulose ou d'amylose immobilisé par une réticulation initiée par des radicaux libres, thermiquement induite, dans lequel les groupes OH, tels que des groupes OR, ont été transformés en un ester de phényle ou de benzyle ou un carbamate de phényle ou de benzyle, non substitué ou mono- ou polysubstitué par un groupe alkyle inférieur et/ou un halogène, ou des mélanges de ceux-ci, sous réserve que les groupes OR ne contiennent pas de doubles liaisons polymérisables avant la réticulation.

5. Procédé de préparation de dérivés polysaccharidiques réticulés suivant la revendication 1, qui consiste à soumettre des dérivés polysaccharidiques dans lesquels les groupes OH, tels que des groupes OR, ont été estérifiés ou transformés en un carbamate (uréthane) pour la réticulation thermique.

   a) après dépôt préalable en couche du dérivé de cellulose sur un support en présence d'un initiateur de radicaux libres, ou
   b) après dépôt en couche du dérivé de cellulose sur un support et revêtement ultérieur du support avec une solution d'un initiateur de radicaux libres, ou
   c) après conditionnement préalable de ceux-ci sous forme de matière pure, en présence d'un initiateur de radicaux libres,

   pour donner le composé suivant la revendication 1.

6. Procédé suivant la revendication 5, dans lequel des dérivés polysaccharidiques dans lesquels les groupes OH, tels que des groupes OR, ont été transformés en un groupe aryle, aralkyle, hétaryle ou ester d'hétarylalkyle substitué ou non substitué ou en un groupe aryle, arylalkyle, hétaryle ou carbamate d'hétarylalkyle non substitué ou substitué, sont soumis à une réticulation thermique

a) après dépôt préalable en couche du dérivé de cellulose sur un support en présence d'un initiateur de radicaux libres, ou

b) après dépôt en couche du dérivé de cellulose sur un support et revêtement ultérieur du support avec une solution d'un initiateur de radicaux libres, ou

c) après conditionnement préalable de ceux-ci sous forme de matière pure, en présence d'un initiateur de radicaux libres,

pour donner le composé suivant la revendication 1.

**7.** Procédé suivant la revendication 5, dans lequel des dérivés polysaccharidiques dans lesquels les OH, tels que des groupes OR, ont été transformés en un groupe aryle ou ester d'arylalkyle substitué ou non substitué ou en un groupe aryle ou carbamate d'arylalkyle non substitué ou substitué, sont soumis à une réticulation thermique

a) après dépôt préalable en couche du dérivé de cellulose sur un support en présence d'un initiateur de radicaux libres, ou

b) après dépôt en couche du dérivé de cellulose sur un support et revêtement ultérieur du support avec une solution d'un initiateur de radicaux libres, ou

c) après conditionnement préalable de ceux-ci sous forme de matière pure, en présence d'un initiateur de radicaux libres,

pour donner le composé suivant la revendication 2.

**8.** Procédé suivant la revendication 5, dans lequel des dérivés de cellulose ou d'amylose, dans lesquels les groupes OH, tels que des groupes OR, ont été transformés en un groupe aryle ou ester d'arylalkyle qui est non substitué ou mono- ou polysubstitué par un groupe alkyle inférieur et/ou un halogène, ou en un carbamate d'aryle ou d'arylalkyle qui est non substitué ou mono- ou polysubstitué par un groupe alkyle inférieur et/ou un halogène, sont soumis à une réticulation thermique

a) après dépôt préalable en couche du dérivé de cellulose sur un support en présence d'un initiateur de radicaux libres, ou

b) après dépôt en couche du dérivé de cellulose sur un support et revêtement ultérieur du support avec une solution d'un initiateur de radicaux libres, ou

c) après conditionnement préalable de ceux-ci sous forme de matière pure, en présence d'un initiateur de radicaux libres,

pour donner le composé suivant la revendication 3.

**9.** Procédé suivant la revendication 5, dans lequel des dérivés de cellulose ou d'amylose, dans lesquels les groupes OH, tels que des groupes OR, ont été transformés en un ester de phényle ou de benzyle qui est non substitué ou mono- ou polysubstitué par un groupe alkyle inférieur et/ou un halogène, ou en un carbamate de phényle ou de benzyle qui est non substitué ou mono- ou polysubstitué par un groupe alkyle inférieur et/ou un halogène, sont soumis à une réticulation thermique

a) après dépôt préalable en couche du dérivé de cellulose sur un support en présence d'un initiateur de radicaux libres, ou

b) après dépôt en couche du dérivé de cellulose sur un support et un autre revêtement du support avec une solution d'un initiateur de radicaux libres, ou

c) après conditionnement préalable de ceux-ci sous forme de matière pure, en présence d'un initiateur de radicaux libres,

pour donner le composé suivant la revendication 4.

**10.** Procédé suivant l'une quelconque des revendications 5-9, dans lequel la réticulation est effectuée thermiquement par chauffage à 50-150°.

**11.** Procédé suivant l'une quelconque des revendications 5-9, dans lequel la réticulation est effectuée thermiquement par chauffage à 100-120°.

**12.** Procédé suivant l'une quelconque des revendications 5-9, dans lequel l'initiateur de radicaux libres utilisés est l'$\alpha$, $\alpha$'-azoisobutyronitrile (AIBN).

**13.** Procédé suivant l'une quelconque des revendications 5-9, dans lequel on utilise un gel de silice, un gel de silice modifié, l'oxyde d'aluminium (alumine), un verre, le graphite ou l'oxyde de zirconium comme support pour le revêtement.

**14.** Procédé suivant l'une quelconque des revendications 5-9, dans lequel on utilise un gel de silice macroporeux comme support pour le revêtement.

**15.** Utilisation de dérivés polysaccharidiques thermiquement réticulés suivant l'une quelconque des revendications 1-4 comme phase stationnaire dans des procédés chromatographiques, en particulier pour la séparation d'énantiomères.

**16.** Utilisation de dérivés polysaccharidiques thermiquement réticulés suivant l'une quelconque des revendications 1-4 comme matière pour la préparation de membranes destinées à diverses utilisations.

**17.** Utilisation de dérivés polysaccharidiques thermiquement réticulés suivant l'une quelconque des revendications 1-4 pour la préparation de revêtements de diverses matières, par exemple le bois, le papier, des polymères et des métaux.